# EUROPÄISCHE PATENTANMELDUNG

(11) **EP 0 837 587 A2**
(43) Veröffentlichungstag der Anmeldung: **22.04.1998**
(21) Anmeldenummer: 97401818.6
(22) Anmeldetag: 28.07.1997
(51) Int. Cl.: H04M 3/42

(54) **Verfahren und Vorrichtung zum Vermitteln von Mitfahrgelegenheiten in einem Telekommunikationsnetz**

(30) Priorität: 09.08.1996 DE 19632296
(71) Anmelder: ALCATEL ALSTHOM COMPAGNIE GENERALE D'ELECTRICITE, 75008 Paris (FR)
(72) Erfinder: Huschke, Jörg, 70825 Korntal (DE)
(74) Vertreter: Knecht, Ulrich Karl, Dipl.-Ing.

(57) **Zusammenfassung**

Es wird Dienste-Server (SRV) vorgestellt, auf den ein Teilnehmer (S), der eine Mitfahrgelegenheit sucht, über ein Telekommunikationsnetz (TNW) zugreift, um dort Angebote zu Mitfahrgelegenheiten, die Teilnehmer (O1,O2,O3) anbieten, einzuholen und auszuwählen. Der Dienste-Server arbeitet nach einem vorgestellten Verfahren zum Vermitteln von Mitfahrgelegenheiten und enthält eine Schnittstellenschaltung (IF), die ihn mit einer Vermittlungsstelle (SWT) verbindet und die einen Ruf des suchenden Teilnehmers (S) empfängt, und einen Datenspeicher (DB), der Datensätze speichert, die Angaben zu den angebotenen Mitfahrgelegenheiten enthalten und die jeweils einem der bietenden Teilnehmer (O1, O2, O3) zugeordnet sind. Außerdem enthält der Dienste-Server einen Prozessor (PROC), der eine Spracheingabe von Eingangsdaten, die der suchende Teilnehmer (S) eingibt und die Angaben zu der gesuchten Mitfahrgelegenheit enthalten, steuert; der die Eingangsdaten mit den Datensätzen vergleicht; und der eine Sprachausgabe von denjenigen Datensätzen, die mit den Eingangsdaten übereinstimmen, steuert. Die Nutzung dieses Telekommunikationsdienstes "Vermitteln von Mitfahrgelegenheiten" ist einfach und leicht zu handhaben.

## Beschreibung

Es ist bekannt in einem Telekommunikationsnetz Telekommunikationsdienste, wie etwa das sogenannte "Telefonbanking", für die Teilnehmer bereitzustellen und dafür Verfahren und Vorrichtungen einzusetzen, bei denen Informationen mittels Spracheingabe, Speicherung und Sprachausgabe erfaßt, gespeichert bzw. ausgegeben werden.

Aus DE 32 21 685 A1 ist bekannt für die Teilnehmern eines Telekommunikationsnetzes einen Sprachspeicherdienst anzubieten, bei dem ein erster Teilnehmer eine Nachricht für einen zweiten Teilnehmer auf einen mit einer Vermittlungsstelle verbundenen Dienste-Server (siehe dort Speichereinrichtung SM in Fig.) aufsprechen kann, falls der zweite Teilnehmer nicht erreichbar ist. Die Nachricht wird in dem Dienste-Server "teilnehmerzugeordnet", d.h. für den zweiten Teilnehmer, gespeichert und kann durch diesen Teilnehmer abgefragt werden. Die Teilnehmer greifen durch Betätigung von Eingabemitteln und durch Eingabe von Kennungen auf den Dienste-Server zu.

Weiterhin ist es bekannt, in einem Datenkommunikationsnetz, wie etwa dem sogenannten Internet, Informationen unter Teilnehmern auszutauschen. Die Teilnehmer greifen dazu mittels eines Datenterminals (z.B. eines Personalcomputers) auf einen Dienste-Server zu. Ein bekannter in solchen Datenkommunikationsnetzen angebotener Dienst ist das Vermitteln von Mitfahrgelegenheiten. Ein Teilnehmer, der eine Mitfahrgelegenheit sucht und auf den Dienste-Server zugreift, holt mittels Tastatureingabe Angebote zu Mitfahrgelegenheiten ein. Auf dem dem Bildschirm werden ihm die Angebote zur Auswahl angezeigt.

Aufgabe der Erfindung ist es, ein Verfahren zum Vermitteln von Mitfahrgelegenheiten und einen danach arbeitenden Dienste-Server für ein Telekommunikationsnetz anzugeben, die für die Teilnehmer den Zugriff auf den Dienste-Server und die Nutzung dieses Dienstes einfach und leicht handhabbar gestalten.

Die Aufgabe wird gelöst durch ein Verfahren nach Anspruch 1 und durch einen Dienste-Server nach Anspruch 5.

Das Vermitteln von Mitfahrgelegenheiten wird erfindungsgemäß durch einen Dienste-Server eines Telekommunikationsnetzes und mittels Spracheingabe und Sprachausgabe durchgeführt. Dadurch können die Teilnehmer diesen Dienst "Vermitteln von Mitfahrgelegenheiten" in Form eines sprachgesteuerten Telefondienstes nutzen.

Außerdem werden in den nebengeordneten Ansprüchen ein Verfahren und ein Dienste-Server zum Speichern von Datensätzen, die Angaben zu angebotenen Mitfahrgelegenheiten enthalten, angegeben.

Im weiteren wird die Erfindung anhand eines Ausführungsbeispiels und unter Zuhilfenahme folgender Zeichnungen beschrieben:
- Fig. 1,: die ein schematische Darstellung eines Telekommunikationsnetzes mit einem Dienste-Server zeigt;
- Fig. 2a u. b,: die ein Ablaufdiagramm des Verfahrens zum Vermitteln von Mitfahrgelegenheiten zeigen, und
- Fig. 3,: die schematisch eine Datenbankstruktur des Datenspeichers innerhalb des Dienste-Servers zeigt.

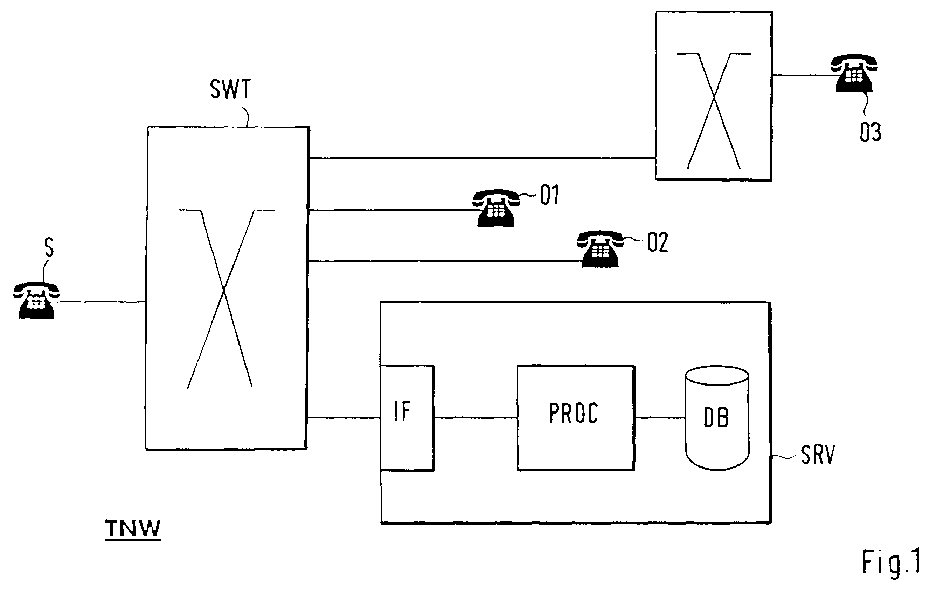

In Figur 1 ist ein Telekommunikationsnetz TNW dargestellt, das eine Vermittlungsstelle SWT enthält, an die Teilnehmer S,O1,O2 und O3 angeschlossen sind. Außerdem ist an die Vermittlungsstelle SWT ein Dienste-Server SRV mit einer Schnittstellenschaltung IF und einem Prozessor PROC und einem Datenspeicher D angeschlossen. Der Teilnehmer S ist ein Teilnehmer, der eine Mitfahrgelegenheit sucht. Er wird daher im weiteren auch suchender Teilnehmer genannt. Die anderen Teilnehmer O1,O2 und O3 sind Teilnehmer, die Mitfahrgelegenheiten anbieten. Sie werden daher im weiteren auch bietende Teilnehmer genannt. Die Teilnehmer sind mit der Vermittlungsstelle SWT direkt oder indirekt über eine weitere Vermittlungsstelle verbunden. In Figur 1 ist beispielsweise der bietende Teilnehmer O3 über eine weitere Vermittlungsstelle mit der Vermittlungsstelle SWT verbunden.

Der in Figur 1 dargestellte Dienste-Server SRV enthält eine Schnittstellenschaltung IF zum Anschluß an die Vermittlungsstelle SWT. Diese Schnittstellenschaltung bildet hier einen Teilnehmeranschluß nach, so daß der Dienste-Server SRV gleich wie ein Teilnehmerendgerät an die Vermittlungsstelle SWT angeschlossen ist. Bei diesem Beispiel ist die Vermittlungsstelle eine digitale Vermittlungsstelle, und der Dienste-Server ist über eine ISDN-Leitung mit dieser Vermittlungsstelle verbunden.

Der Dienste-Server enthält außerdem einen mit der Schnittstellenschaltung IF verbundenen Prozessor PROC und einen damit verbundenen Datenspeicher DB. In diesem Beispiel ist der Dienste-Server auf der Basis eines Personal-Computers aufgebaut: der Prozessor ist der Mikroprozessor und der Datenspeicher ist der Festplattenspeicher dieses Personal-Computers. Dadurch kann der Dienste-Server SRV mit einfachen Mitteln realisiert werden. Für jeden der mit der Vermittlungsstelle verbundenen Teilnehmer S,O1,O2 und O3 ist schematisch jeweils ein Teilnehmerendgerät in Figur 1 dargestellt. Es können analoge oder digitale Teilnehmerendgeräte, das heißt zum Beispiel herkömmliche Telefone, verwendet werden.

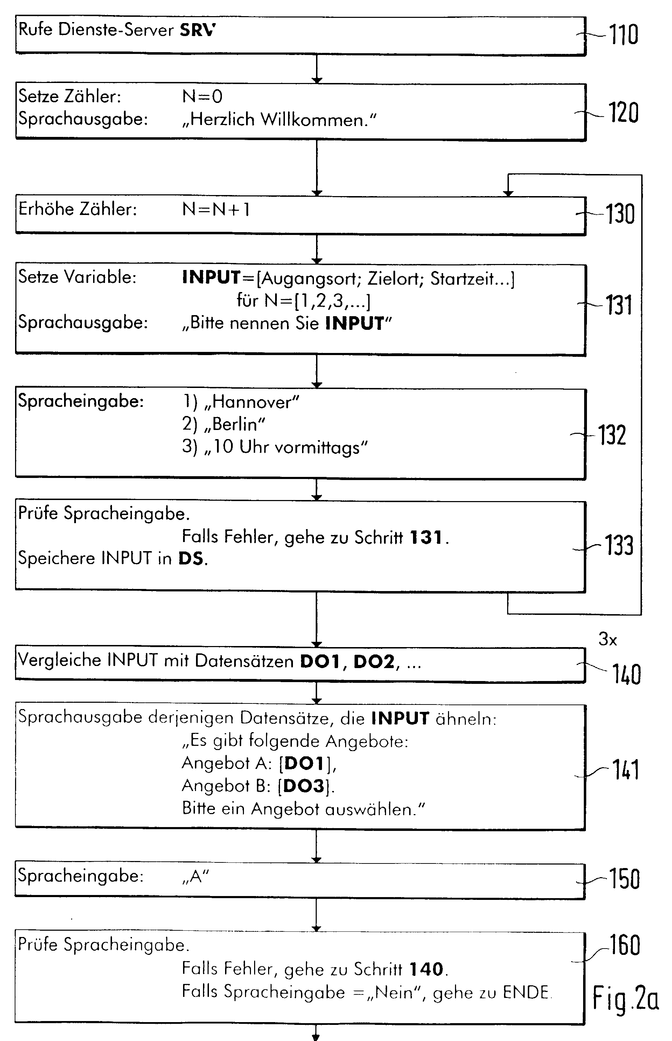

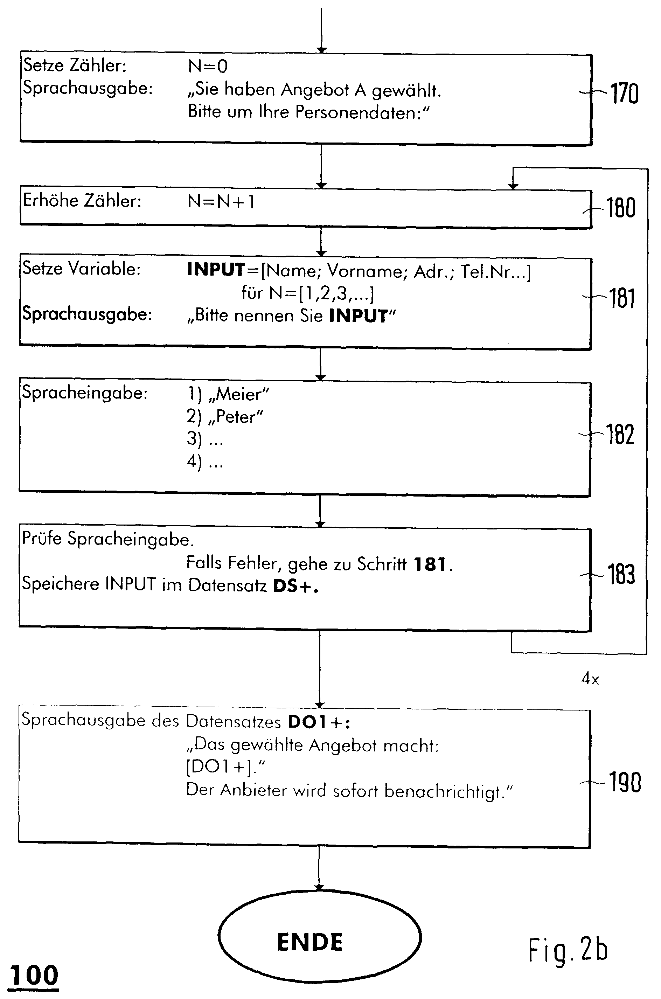

Das erfindungsgemäße Verfahren und die Arbeitsweise des in Figur 1 dargestellten Dienste-Servers SRV wird nun unter Hinzuziehung der Fig. 2 beschrieben, die sich aus den Fig. 2 a und 2 b zusammensetzt:

In Figur 2 ist schematisch ein Ablaufdiagramm zu dem Verfahren 100 zum Vermitteln von Mitfahrgelegenheiten dargestellt. Das Verfahren 100 beginnt mit einem Schritt 1 10, bei dem der suchende Teilnehmer S den Dienste-Server SRV anruft, um den Dienst "Vermitteln von Mitfahrgelegenheiten" zu nutzen. Darauf folgt ein Schritt 120, bei dem innerhalb des Dienste-Servers ein Zähler N auf Null gesetzt wird und bei dem der Dienste-Server an den suchenden Teilnehmer eine Sprachausgabe ausgibt, um ihn zu begrüßen. Nun folgt eine Schleife mit den Schritten 130 bis 133, die durchschritten wird, um Eingangsdaten

INPUT aufzunehmen, die Angaben zu der gesuchten Mitfahrgelegenheit enthalten.

Die Eingangsdaten INPUT umfassen zum ersten den Ausgangsort, zum zweiten den Zielort und zum dritten die Abfahrtzeit für die gesuchte Mitfahrgelegenheit. In einem ersten Schritt 130 wird der Zähler N um 1 erhöht, um in einem nachfolgenden Schritt 131 das erste Eingangsdatum (INPUT = Ausgangsort) aufzunehmen. Dazu wird der suchende Teilnehmer mittels Sprachausgabe aufgefordert, dieses Eingangsdatum zu nennen. In einem nachfolgenden Schritt 132 gibt der suchende Teilnehmer mittels Spracheingabe den Ausgangsort ein ,in diesem Beispiel die Stadt Hannover. Danach prüft der Dienste-Server die Spracheingabe. Falls eine fehlerhafte Spracheingabe festgestellt wird, wird der Schritt 131 wiederholt. Ist die Spracheingabe fehlerfrei, wird das Eingangsdatum in einen Datensatz DS, der dem suchenden Teilnehmer zugeordnet ist, gespeichert. Danach wird die Schleife mit den Schritten 130 bis 133 wiederholt, um das zweite Eingangsdatum, d. h. den Zielort für die gesuchte Mitfahrgelegenheit, aufzunehmen. In einem dritten Durchlauf dieser Schleife wird zum Schluß die Abfahrtszeit aufgenommen.

Sind alle Eingangsdaten aufgenommen, so werden in einem nachfolgenden Schritt 140 diese mit Datensätzen DO1,DO2 usw. vergleichen. Diese Datensätze enthalten Angaben zu Mitfahrgelegenheiten, die die bietenden Teilnehmer O1,O2 und O3 anbieten. Demnach entspricht jeder dieser Datensätze einem Angebot zu einer der angebotenen Mitfahrgelegenheiten. Nun wird in einem nachfolgenden Schritt 141 geprüft, welche dieser Datensätze DO1,DO2 und DO3 mit den eingegebenen Eingangsdaten INPUT übereinstimmen. Der Grad der Übereinstimmung muß nicht 100 % betragen, sondern kann auch einen anderen Wert, zum Beispiel 80 %, annehmen. Dieser Wert, der dem Korrelationsgrad zwischen den Datensätzen und den Eingangsdaten entspricht, ist frei bestimmbar.

Diejenigen der Datensätze, die den Eingangsdaten sehr stark ähneln, das heißt, die hier mehr als 80 % mit den Eingangsdaten übereinstimmen, werden dann mittels Sprachausgabe an den suchenden Teilnehmer S ausgegeben.

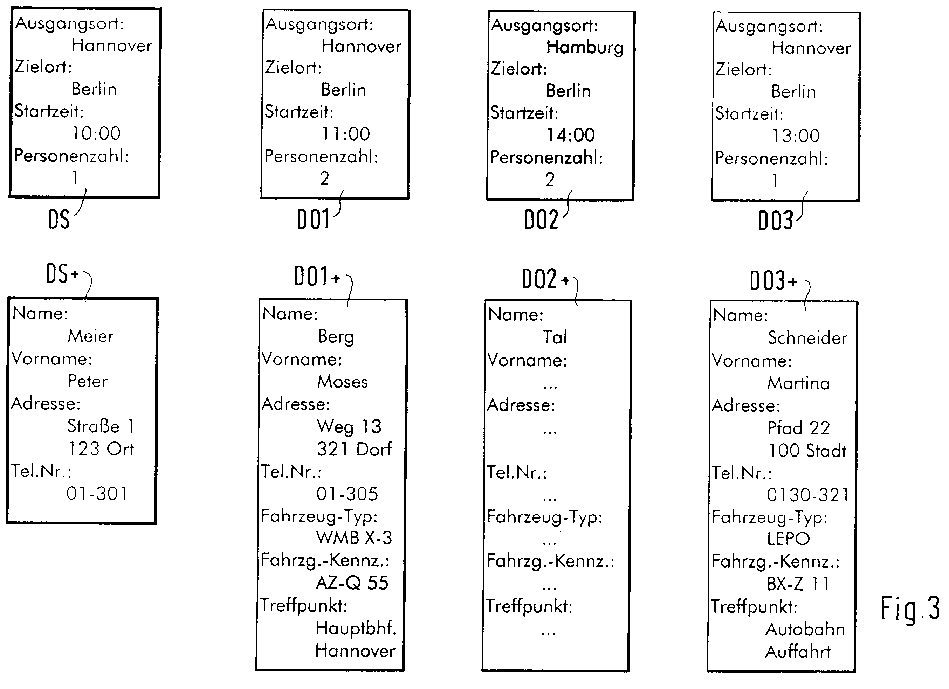

Zur Verdeutlichung des in Schritt 140 durchgeführten Vergleiches und der im Schritt 141 durchgeführten Sprachausgabe wird hier auf Figur 3 verwiesen, in der schematisch eine Datenbankstruktur für den Datenspeicher DB dargestellt ist. Wie in Figur 3 zu sehen, sind in dem Datensatz DS, der dem suchenden Teilnehmer S zugeordnet ist, folgende Eingangsdaten enthalten:

Der Ausgangsort "Hannover", der Zielort "Berlin", die Abfahrtszeit "10.00 Uhr" und zusätzlich die Angabe der Personenzahl (hier "1"). Durch Vergleich dieser Eingangsdaten mit den Datensätzen DO1 bis DO3, die den bietenden Teilnehmern zugeordnet sind, wird in diesem Beispiel festgestellt, daß die Datensätze DO1 und DO3 den Eingangsdaten ähneln. Im Datensatz DO1, der dem zu bietenden Teilnehmer O1 zugeordnet ist, sind ebenfalls der Ausgangsort "Hannover" und der Zielort "Berlin" abgelegt. Lediglich die Abfahrtszeit ist hier auf 1 1.00 Uhr und die Personenzahl auf 2 festgelegt. Der Datensatz DO3 unterscheidet sich von den Eingangsdaten lediglich in der Abfahrtszeit, die hier auf 13.00 Uhr festgelegt ist. Die Angaben in dem Datensatz DO2 unterscheiden sich von den Eingangsdaten sowohl in der Abfahrtszeit (hier "14.00 Uhr") als auch in der Personenzahl (hier "2"). Diese Abweichungen sind zu groß, so daß lediglich die Datensätze DO1 und DO3 in der Sprachausgabe nach Schritt 141 ausgegeben werden. Die Sprachausgabe an den suchenden Teilnehmer erfolgt beispielsweise mit folgenden Worten:

"Es gibt folgende Angebote:
Angebot A: Mitfahrgelegenheit von Hannover nach Berlin, Abfahrtszeit 1 1.00 Uhr, freie Plätze für 2 Personen.
Angebot B: Mitfahrgelegenheit von Hannover nach Berlin, Abfahrtszeit 13.00 Uhr, freie Plätze für 1 Person.
Bitte ein Angebot auswählen".

In einem Schritt 150 wählt nun der suchende Teilnehmer S eines der Angebote aus, hier etwa das Angebot A. Danach wird in einem Schritt 160 geprüft, ob die Spracheingabe richtig oder falsch ist. Bei einer fehlerhaften Spracheingabe wird der Schritt 141 wiederholt. Wurde vom suchenden Teilnehmer ein "Nein" eingegeben, so ist das Verfahren beendet. Ansonsten wird in einem nachfolgenden Schritt 170 der Zähler auf Null gesetzt. Außerdem wird mittels Sprachausgabe das ausgewählte Angebot bestätigt sowie um die Eingabe von Angaben zu dem suchenden Teilnehmer S gebeten.

Dazu wird ein zusätzlicher Datensatz DS+ angelegt und in einer Schleife mit den Schritten 180 bis 183 werden diese Angaben, die die Personendaten zu dem suchenden Teilnehmer betreffen, abgefragt. Die Aufnahme der Personendaten, wie Name, Vorname, Adresse und Telefonnummer des suchenden Teilnehmers, erfolgt mittels Spracheingabe und Sprachausgabe, ähnlich wie bereits oben anhand der Aufnahme der Eingangsdaten INPUT beschrieben. Sind die Personendaten aufgenommen, so wird in einem Schritt 190 ein Datensatz DO1 + ausgegeben, der dem bietenden Teilnehmer O1 zugeordnet ist. Dieser Datensatz D1 + enthält folgende Angaben zu dem bietenden Teilnehmer O1, der das ausgewählte Angebot gemacht hat:

die Personendaten, wie Name, Vorname, Adresse und Telefonnummer sowie weitere Daten, wie den Fahrzeugtyp, das Fahrzeugkennzeichen und den Treffpunkt. Durch Sprachausgabe dieser Angaben wird der suchende Teilnehmer S vollständig darüber informiert, wer das ausgewählte Angebot macht und wo genau er den anbietenden Teilnehmer zur Abfahrtszeit treffen kann.

Das oben beschriebene Verfahren 100 wird von dem Dienste-Server SRV durchgeführt. Durch die von dem Dienste-Server gesteuerte Spracheingabe und Sprachausgabe kann der suchende Teilnehmer sehr einfach den Dienst "Vermitteln von Mitfahrgelegenheiten" nutzen. Die Steuerung der Spracheingabe und der Sprachausgabe erfolgt durch hier nicht dargestellte Mittel zur Spracherkennung.

Das Verfahren 100 und der danach arbeitende Dienste-Server SRV ermöglichen es, für Teilnehmer eines Telekommunikationsnetzes über ein herkömmliches Teilnehmerendgerät, das heißt über ein einfaches Telefon, Angebote zu Mitfahrgelegenheiten einzuholen und auszuwählen. Der Einsatz von Datenterminals ist nicht erforderlich. Da zwischen den Teilnehmern und dem Dienste-Server keine Datensignale, sondern Sprachsignale ausgetauscht werden, kann das Telekommunikationsnetz sehr einfach ausgeführt sein.

Der oben beschriebene Dienste-Server SRV ist über einen Teilnehmeranschluß, hier z.B. über einen ISDN-Anschluß, mit der Vermittlungsstelle verbunden. Durch die Wahl einer dem Dienste-Server zugeordneten Rufnummer können die Teilnehmer auf diesen Dienste-Server schnell und einfach zugreifen.

Es ist auch denkbar, den Dienste-Server in die Vermittlungsstelle zu integrieren oder die Vermittlungsstelle selbst mit den oben beschriebenen technischen Mitteln zum Vermitteln von Mitfahrgelegenheiten auszustatten, d.h. mit dem Prozessor und mit dem Datenspeicher auszustatten. Unter dem Begriff "Vermittlungsstelle" werden hier auch sogenannte Telekommunikationsanlagen, also Nebenstellenanlagen verstanden.

Um die für das beschriebene Verfahren benötigten Datensätze mit den Angaben zu den angebotenen Mitfahrgelegeheiten bereitzustellen, wird auch ein Verfahren zum Speichern von diesen Datensätzen vorgeschlagen, bei dem mittels Spracheingabe die Angaben zu der gesuchten Mitfahrgelegenheit in den Dienste-Server eingegeben werden und danach in dem Datensatz, der diesem bietenden Teilnehmer zugeordnet wird, gespeichert werden. Es ist vorteolhaft zusätzlich zu den Datensätzen, die Angaben zu den angebotenen Mitfahrgelegenheiten enthalten, noch entsprechend viele mit den Datensätzen verknüpfte zusätzliche Datensätze, die Angaben zu den bietenden Teilnehmer, die die Mitfahrgelegenheiten anbieten, enthalten, zu speichern.

Vorgeschlagen wird auch der Dienste-Server zum Speichern von diesen Datensätzen, die Angaben zu angebotenen Mitfahrgelegenheiten enthalten, und zur Bereitstellung der Datensätze für einen suchenden Teilnehmer, der eine Mitfahrgelegenheit sucht und der über ein Telekommunikationsnetz auf den Dienste-Server zugreift, um dort die Angaben aus den Datensätzen abzufragen. Dieser Dienste-Server enhält dazu eine Schnittstellenschaltung, die den Dienste-Server mit einer Vermittlungsstelle des Telekommunikationsnetzes verbindet und die einen Ruf eines bietenden Teilnehmers, der eine Mitfahrgelegenheit bietet, empfängt und einen Prozessor, der eine Spracheingabe von den Angaben, die der bietende Teilnehmer eingibt, steuert; und der das Speichern dieser Angaben in dem Datensatz, der dem bietenden Teilnehmer zugeordnet ist, steuert. Außerdem enthält der Dienste-Server einen mit dem Prozessor verbundenen Datenspeicher, der den Datensatz, der die Angaben zu der angebotenen Mitfahrgelegenheit enthält, speichert.

Zum Speichern der Datensätze wird auch eine Vermittlungsstelle für ein Telekommunikationsnetz vorgeschlagen. Die Vermittlungsstelle enhält zum Speichern und zur Bereitstellung der Datensätze für einen suchenden Teilnehmer, der eine Mitfahrgelegenheit sucht und der über das Telekommunikationsnetz auf die Vermittlungsstelle zugreift, um dort die Angaben aus den Datensätzen abzufragen, eine Empfangsschaltung, die einen Ruf eines bietenden Teilnehmers, der eine Mitfahrgelegenheit bietet, empfängt. Außerdem enthält die Vermittlungsstelle einen mit der Empfangsschaltung verbundenen Prozessor, der eine Spracheingabe von den Angaben, die der bietende Teilnehmer eingibt, steuert; und der das Speichern dieser Angaben in dem Datensatz, der dem bietenden Teilnehmer zugeordnet ist, steuert. Die Vermittlungsstelle enthält außerdem einen mit dem Prozessor verbundenen Datenspeicher, der den Datensatz, der die Angaben zu der angebotenen Mitfahrgelegenheit enthält, speichert.

Durch die Erfindung werden Verfahren mit Spracheingabe und mit Sprachausgabe und Vorrichtungen vorgeschlagen, die eine einfach zu handhabende Nutzung des Dienstes durch den suchenden Teilnehmer und auch durch den bietenden Teilnehmer ermöglichen.

## Patentansprüche

1. Verfahren (100) zum Vermitteln von Mitfahrgelegenheiten, bei dem ein suchender Teilnehmer (S), der eine Mitfahrgelegenheit sucht, über ein Telekommunikationsnetz (TNW) auf einen Dienste-Server (SRV) zugreift und dort Angebote zu Mitfahrgelegenheiten, die bietende Teilnehmer (O1,O2,O3) anbieten, einholt und auswählt, mit folgenden Schritten:
- der Dienste-Server (SRV) wird über das Telekommunikationsnetz (TNW) von dem suchenden Teilnehmer (S) angerufen (110);
- mittels Spracheingabe werden Eingangsdaten (INPUT), die Angaben zu der gesuchten Mitfahrgelegenheit enthalten, in den Dienste-Server eingegeben (132);
- die Eingangsdaten (INPUT) werden mit Datensätzen (DO1, DO2, DO3) verglichen (140), die in dem Dienste-Server (SRV) gespeichert sind, die Angaben zu den angebotenen Mitfahrgelegenheiten enthalten und die jeweils einem der bietenden Teilnehmer (O1, O2, O3) zugeordnet sind;
- dem suchenden Teilnehmer (S) werden Angebote zur Auswahl angeboten, indem diejenigen Datensätze (DO1, DO3), die mit den Eingangsdaten (INPUT) übereinstimmen, mittels Sprachausgabe ausgegeben werden (141); und
- eines der Angebote wird durch den suchenden Teilnehmer (S) angenommen, indem mittels Spracheingabe einer der Datensätze (DO1) ausgewählt wird (150).

2. Verfahren (100) nach Anspruch 1, bei dem die Eingangsdaten (INPUT) und jeder der gespeicherten Datensätze (DO1,DO2,DO3) als Angaben zu der gesuchten bzw. angebotenen Mitfahrgelegenheit einen Ausgangsort, einen Zielort und eine Abfahrtszeit enthalten, und bei dem diese Angaben miteinander verglichen werden (140).

3. Verfahren nach Anspruch 2, bei dem jeder der gespeicherten Datensätze, die die Angaben zu den angebotenen Mitfahrgelegenheiten enthalten und die jeweils einem der bietenden Teilnehmer zugeordnet sind, neben den Angaben zu der angebotenen Mitfahrgelegenheit auch Angaben zu dem bietenden Teilnehmer enthält.

4. Verfahren (100) nach Anspruch 2, bei dem zusätzlich zu den Datensätzen (DO1, DO2, DO3), die Angaben zu den angebotenen Mitfahrgelegenheiten enthalten, noch entsprechend viele mit den Datensätzen verknüpfte zusätzliche Datensätze (DO1 +, DO2+, DO3+) gespeichert sind, die Angaben zu den bietenden Teilnehmer (O1, O2, O3), die die Mitfahrgelegenheiten anbieten, enthalten; und bei dem, falls eines der Angebote durch den suchenden Teilnehmer (S) angenommen wird (150), der mit dem ausgewählten Datensatz (DO1) verknüpfte zusätzliche Datensatz (DO1 +) mittels Sprachausgabe ausgegeben wird (190).

5. Dienste-Server (SRV) zum Vermitteln von Mitfahrgelegenheiten und zum Zugriff eines suchenden Teilnehmers (S), der eine Mitfahrgelegenheit sucht, über ein Telekommunikationsnetz (TNW) auf den Dienste-Server, um dort Angebote zu Mitfahrgelegenheiten, die bietende Teilnehmer (O1,O2,O3) anbieten, einzuholen und auszuwählen, mit folgenden Mitteln:
- mit einer Schnittstellenschaltung (IF), die den Dienste-Servers (SRV) mit einer Vermittlungsstelle (SWT) des Telekommunikationsnetzes (TNW) verbindet und die einen Ruf des suchenden Teilnehmers (S) empfängt;
- mit einem Datenspeicher (DB), der Datensätze (DO1, DO2, DO3) speichert, die Angaben zu den angebotenen Mitfahrgelegenheiten enthalten und die jeweils einem der bietenden Teilnehmer (O1,O2, O3) zugeordnet sind;
- und mit einem mit der Schnittstellenschaltung (IF) und mit dem Datenspeicher (DB) verbundenen Prozessor (PR0C), der eine Spracheingabe von Eingangsdaten (INPUT), die der suchende Teilnehmer (S) eingibt und die Angaben zu der gesuchten Mitfahrgelegenheit enthalten, steuert; der die Eingangsdaten (INPUT) mit den Datensätzen (DO1, DO2, DO3) vergleicht; und der eine Sprachausgabe von denjenigen Datensätzen (DO1, DO3), die mit den Eingangsdaten (INPUT) übereinstimmen, steuert.

6. Dienste-Server (SRV) nach Anspruch 5, bei dem die Schnittstellenschaltung (IF) einen Teilnehmeranschluß nachbildet.

7. Vermittlungsstelle für ein Telekommunikationsnetz und zum Vermitteln von Mitfahrgelegenheiten, bei dem ein suchender Teilnehmer, der eine Mitfahrgelegenheit sucht, über das Telekommunikationsnetz auf Vermittlungstellle zugreift, um dort Angebote zu Mitfahrgelegenheiten, die bietende Teilnehmer anbieten, einzuholen und auszuwählen, mit folgenden Mitteln:
- mit einem Datenspeicher, der Datensätze speichert, die Angaben zu den angebotenen Mitfahrgelegenheiten enthalten und die jeweils einem der bietenden Teilnehmer zugeordnet sind; und
- mit einem dem Datenspeicher verbundenen Prozessor, der eine Spracheingabe von Eingangsdaten, die der suchende Teilnehmer eingibt und die Angaben zu der gesuchten Mitfahrgelegenheit enthalten, steuert; der die Eingangsdaten mit den Datensätzen vergleicht; und der eine Sprachausgabe von denjenigen Datensätzen, die mit den Eingangsdaten übereinstimmen, steuert.

8. Verfahren zum Speichern von Datensätzen, die Angaben zu angebotenen Mitfahrgelegenheiten enthalten, in einem Dienste-Server, auf den ein suchender Teilnehmer, der eine Mitfahrgelegenheit sucht, über ein Telekommunikationsnetz zugreift, um dort die Angaben aus den Datensätzen abzufragen, mit folgenden Schritten:
- der Dienste-Server wird über das Telekommunikationsnetz von einem bietenden Teilnehmer, der eine Mitfahrgelegenheit anbietet, angerufen;
- mittels Spracheingabe werden die Angaben zu der gesuchten Mitfahrgelegenheit in den Dienste-Server eingegeben und danach in dem Datensatz, der diesem bietenden Teilnehmer zugeordnet wird, gespeichert;

9. Verfahren nach Anspruch 8, bei dem zusätzlich zu den Datensätzen, die Angaben zu den angebotenen Mitfahrgelegenheiten enthalten, noch entsprechend viele mit den Datensätzen verknüpfte zusätzliche Datensätze gespeichert werden, die Angaben zu den bietenden Teilnehmer, die die Mitfahrgelegenheiten anbieten, enthalten.

10. Dienste-Server zum Speichern von Datensätzen, die Angaben zu angebotenen Mitfahrgelegenheiten enthalten, und zur Bereitstellung der Datensätze für einen suchenden Teilnehmer, der eine Mitfahrgelegenheit sucht und der über ein Telekommunikationsnetz auf den Dienste-Server zugreift, um dort die Angaben aus den Datensätzen abzufragen, mit folgenden Mitteln:
- mit einer Schnittstellenschaltung, die den Dienste-Server mit einer Vermittlungsstelle des Telekommunikationsnetzes verbindet und die einen Ruf eines bietenden Teilnehmers, der eine Mitfahrgelegenheit bietet, empfängt;
- mit einem mit der Schnittstellenschaltung verbundenen Prozessor, der eine Spracheingabe von den Angaben, die der bietende Teilnehmer eingibt, steuert; und der das Speichern dieser Angaben in dem Datensatz, der dem bietenden Teilnehmer zugeordnet ist, steuert; und
- mit einem mit dem Prozessor verbundenen Datenspeicher, der den Datensatz, der die Angaben zu der angebotenen Mitfahrgelegenheit enthält, speichert.

11. Vermittlungsstelle für ein Telekommunikationsnetz und zum Speichern von Datensätzen, die Angaben zu angebotenen Mitfahrgelegenheiten enthalten, und zur Bereitstellung der Datensätze für einen suchenden Teilnehmer, der eine Mitfahrgelegenheit sucht und der über das Telekommunikationsnetz auf die Vermittlungsstelle zugreift, um dort die Angaben aus den Datensätzen abzufragen, mit folgenden Mitteln:
- mit einer Empfangsschaltung, die einen Ruf eines bietenden Teilnehmers, der eine Mitfahrgelegenheit bietet, empfängt;
- mit einem mit der Empfangsschaltung verbundenen Prozessor, der eine Spracheingabe von den Angaben, die der bietende Teilnehmer eingibt, steuert; und der das Speichern dieser Angaben in dem Datensatz, der dem bietenden Teilnehmer zugeordnet ist, steuert; und
- mit einem mit dem Prozessor verbundenen Datenspeicher, der den Datensatz, der die Angaben zu der angebotenen Mitfahrgelegenheit enthält, speichert.
